# EUROPEAN PATENT SPECIFICATION

(11) **EP 3 167 211 B1**
(45) Date of publication and mention of the grant of the patent: **03.01.2018**
(21) Application number: 15745410.9
(22) Date of filing: 10.07.2015
(51) Int. Cl.: F16K 1/54

(54) **A DUAL ORIFICE VARIABLE FLOW RATE VALVE**
VENTIL MIT VERDOPPELTER ÖFFNUNG UND VARIABLEN DURCHFLUSS
VANNE À DOUBLE ORIFICE À DÉBIT VARIABLE

(30) Priority: 10.07.2014 FR 1456641
(43) Date of publication of application: 17.05.2017
(73) Proprietor: Fluid Automation Systems S.A., 1290 Versoix (CH)
(72) Inventor: DEPERRAZ, Nicolas, F-74890 Bons en Chablais (FR)
(74) Representative: Edson, Russell Gregory
(86) International application number: PCT/EP2015/065808
(87) International publication number: WO 2016/005553

(56) References cited:
- EP-A1- 0 631 075
- EP-A2- 0 714 004
- DE-A1-102008 064 408
- DE-A1-102012 204 922
- DE-B3-102004 037 269

## Description

### TECHNICAL FIELD

The embodiments described below relate to variable flow rate valves and, more particularly, to a dual orifice variable flow rate valve.

### BACKGROUND

Valves are used to control fluid flow rates for various applications. For example, a variable flow rate valve can receive a fluid from a fluid supply at a given pressure and supply the fluid at a desired flow rate. This is typically done with a valve member that moves relative to a fixed orifice in a valve body. The valve member can be moved by, for example, a solenoid. In valves with solenoids, an electric current is supplied to a coil that is disposed proximate to the valve member. The coil generates a magnetic field that applies a magnetic force on the valve member, which moves the valve member.

Sometimes variable fluid flow rate valves are unable to meet flow rate specifications. For example, some applications may require accurate proportional control at both high and low flow rates. That is, the current supplied to the valve may need to linearly correspond with the fluid flow rate at both the high and low flow rates. However, the current supplied to the valve may not correspond to an expected fluid flow rate. For example, the fluid flow rate can have a linear correlation at low fluid flow rates but be non-linear at higher fluid flow rates. This can be due to many factors, such as valve member movements that are small relative to the large valve member displacements that correspond to high fluid flow rates.

Proportional control at a high fluid flow rate can be accomplished with a large orifice. However, the large orifice can lead to non-proportional fluid flow rate control at lower flow rates. For example, to achieve the lower flow rates, the valve member may be relatively close to the orifice, which causes the fluid flow rate to be non-proportional to the current in the solenoid. Proportional control can be accomplished with complex solenoid designs or sophisticated control systems, however such designs are prohibitively expensive and prone to failure.

Accordingly, there is a need for an inexpensive solution for applications that are able to meet flow rate specifications at both high and low flow rates, which is provided by a dual orifice variable flow rate valve.

US 2012/0248365 A1 (published also as DE102012204922 A1) discloses a two-stage flow control valve having first and second valve members and an actuator configured to move the second valve member.

### SUMMARY

According to a first aspect of the invention there is provided a dual orifice variable flow rate valve (100, 700, 900) comprises a valve body (110, 710, 910) with a first fluid port (112, 712, 912) and a second fluid port (114, 714, 914), the first fluid port (112, 712, 912) having a first fluid orifice (112a, 712a, 912a), a dual valve member (120, 720, 920) disposed in the valve body (110, 710, 910), the dual valve member (120, 720, 920) is comprised of a first valve member (122, 722, 922) disposed in the valve body (110, 710, 910), the first valve member (122, 722, 922) having a second fluid orifice (122e, 722e, 922e) fluidly coupled to the first fluid port (112, 712, 912) and a first distal end (122a, 722a, 922a) proximate the first fluid orifice (112a, 712a, 912a) and a second valve member (124, 724, 924) disposed in the valve body (110, 710, 910) proximate the second fluid orifice (122e, 722e, 922e) in the first valve member (122, 722, 922). The dual orifice variable flow rate valve (100) also comprises an actuator (130, 730, 930) configured to move the second valve member (124, 724, 924) relative to the first valve member (122, 722, 922) to control a fluid flow between the first fluid port (112, 712, 912) and the second fluid port (114, 714, 914) through the second fluid orifice (122e, 722e, 922e) in the first valve member (122, 722, 922), and a diaphragm (140, 740, 940), that prevents fluid from contacting the actuator (130, 730, 940) and limits the movement of the dual valve member.

Preferably, the actuator (130, 730, 930) is further configured to move the second valve member (124, 724, 924) to control a fluid flow rate between the first fluid port (112, 712, 912) and the second fluid port (114, 714, 914) through the first fluid orifice (112a, 712a, 912a).

Preferably, the second valve member (124, 724, 924) further comprises a sealing end (124b, 724b, 924b) that selectively engages the first valve member (122, 722, 922).

Preferably, the sealing end (124b, 724b, 924b) is disposed inside the first valve member (122, 722, 922) and is adapted to contact a surface inside the first valve member (122, 722, 922).

Preferably, the second valve member (124, 724, 924) further comprises an armature end (124a, 724a, 924a) that selectively engages the diaphragm (140, 740, 940) to limit a stroke length of the second valve member (124, 724, 924).

Preferably, the first valve member (122, 722, 922) and the second valve member (124, 724, 924) move along an axis (X-X) of the dual orifice variable flow rate valve (100, 700, 900).

Preferably, the second valve member (124, 724, 924) moves along the axis (X-X) at a second stroke length that corresponds with the fluid flow rate between the first fluid port (112, 712, 912) and the second fluid port (114, 714, 914) via the conduit in the first valve member (122, 722, 922).

Preferably, the dual orifice variable flow rate valve further comprises a plurality of conduits (922c) concentrically disposed about the axis (X).

According to a second aspect, the invention provides a method of controlling a fluid flow through a dual orifice variable flow rate valve (100, 700, 900) comprised of a first fluid port (112, 712, 912) and a second fluid port (114, 714, 914), the method comprising the steps of:
providing a first valve member (122, 722, 922) and a second valve member (124, 724, 924), fluidly coupling the first fluid port (112, 712, 912) and the second fluid port (114, 714, 914) through a second fluid orifice (122e, 722e, 922e) in the first valve member (122, 722, 922) by moving the second valve member (124, 724, 924), with an actuator (130, 730, 930), fluidly coupling the first fluid port (112, 712, 912) and the second fluid port (114, 714, 914) through a first fluid orifice (112a, 712a, 912a) by moving the first valve member (122, 722, 922) with the second valve member (124, 724, 924), and providing a diaphragm (140, 740, 940) that prevents fluid from contacting the actuator (130, 730, 930) and limits the movement of the dual valve member. Preferably, the method further comprises flowing fluid through the second fluid orifice (122e, 722e, 922e) at a first fluid flow rate that corresponds to a displacement distance of the second valve member (124, 724, 924) and flowing fluid through the first fluid orifice (112a, 712a, 912a) at a second fluid flow rate that corresponds to a displacement distance of the first valve member (122, 722, 922).

Preferably, the method further comprises controlling the fluid flow rate through the second fluid orifice (122e, 722e, 922e) and the first fluid orifice (112a, 712a, 912a) with a current in an actuator (130, 730, 930) that applies a magnetic force to the second valve member (124, 724, 924).

Preferably, the method further comprises selectively engaging a sealing end (124b, 724b, 924b) of the second valve member (124, 724, 924) with the first valve member (122, 722, 922) to move the first valve member (122, 722, 922).

Preferably, selectively engaging comprises contacting a surface in the first valve member (122, 722, 922) with the sealing end (124b, 724b, 924b).

Preferably, the method further comprises selectively engaging an armature end (124a, 724a, 924a) on the second valve member (124, 724, 924) with the diaphragm to limit a stroke length of the second valve member (124, 724, 924).

Preferably, the method further comprises moving the first valve member (122, 722, 922) and the second valve member (124, 724, 924) along an axis (X-X) to fluidly couple the first fluid port (112, 712, 912) and the second fluid port (114, 714, 914).

Preferably, the method further comprises displacing the second valve member (124, 724, 924) away from the second fluid orifice (122e, 722e, 922e) wherein the second fluid orifice (122e, 722e, 922e) is in the first valve member (122, 722, 922).

### BRIEF DESCRIPTION OF THE DRAWINGS

The same reference number represents the same element on all drawings. It should be understood that the drawings are not necessarily to scale.
FIG. 1 shows a perspective view of a dual orifice variable flow rate valve 100 according to an embodiment.
FIG. 2 shows a sectional view of the dual orifice variable flow rate valve 100 taken at 2-2 shown in FIG. 1.
FIG. 3 is an enlarged sectional view of the dual orifice variable flow rate valve 100.
FIG. 4 shows a further enlarged cross sectional view of the dual orifice variable flow rate valve 100.
FIGS. 5a and 5b show the sectional view of the dual orifice variable flow rate valve 100 taken at 2-2 in FIG. 1.
FIG. 6 shows a graph 600 of a flow rate 610 representing an exemplary fluid flow through the dual orifice variable flow rate valve 100 according to an embodiment.
FIG. 7 shows a dual orifice variable flow rate valve 700 according to an embodiment.
FIG. 8 is an enlarged sectional view of the dual orifice variable flow rate valve 700.
FIG. 9 shows a dual orifice variable flow rate valve 900 according to an embodiment.
FIG. 10 is an enlarged sectional view of the dual orifice variable flow rate valve 900.

### DETAILED DESCRIPTION

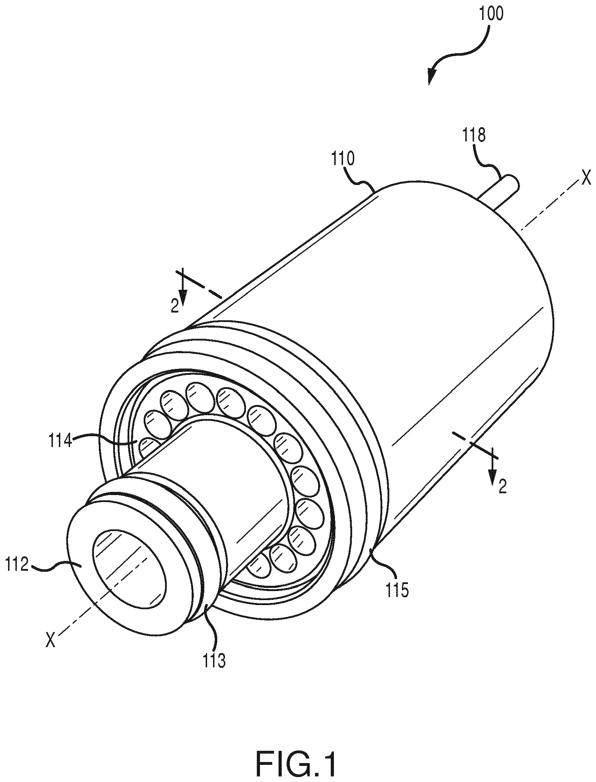

FIGS. 1 - 10 and the following description depict specific examples to teach those skilled in the art how to make and use the best mode of embodiments of a dual orifice variable flow rate valve. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the dual orifice variable flow rate valve. As a result, the embodiments described below are not limited to the specific examples described below, but only by the claims and their equivalents.

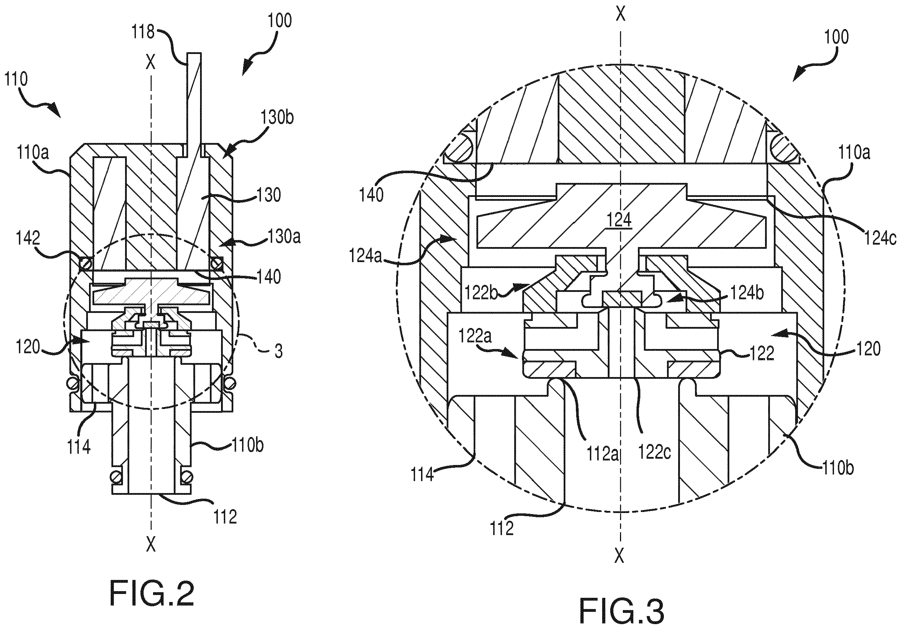

**FIG. 1** shows a perspective view of a dual orifice variable flow rate valve 100 according to an embodiment. The dual orifice variable flow rate valve 100 includes a valve body 110 that contains a dual valve member, as will be explained in more detail in the following with reference to FIGS. 2-5b. Still referring to FIG. 1, the valve body 110 includes a first fluid port 112 and a second fluid port 114. A plurality of the second fluid port 114 are shown although more or fewer than are shown can be employed in alternative embodiments. Additionally or alternatively, more than one first fluid port 112 can be employed in alternative embodiments. An inner o-ring 113 is coupled to the first fluid port 112 and an outer o-ring 115 is coupled to the valve body 110. The valve body 110, first fluid port 112, inner o-ring 113, the plurality of the second fluid port 114, and outer o-ring 115 are shown as concentrically disposed around an axis X-X. The axis X-X can be a longitudinal center axis of the dual orifice variable flow rate valve 100. Also shown is a signal line 118 that can carry a signal, such as electrical current, to actuate the dual orifice variable flow rate valve 100.

The first fluid port 112 and the second fluid port 114 may be fluidly coupled to conduits (not shown) that carry a fluid. For example, according to an embodiment, a supply conduit can be coupled to the first fluid port 112 and a load conduit can be fluidly coupled to the second fluid port 114. The load conduit can carry pressurized fluid that is controlled by the dual orifice variable flow rate valve 100. The fluid controlled by the dual orifice variable flow rate valve 100 can be supplied via the second fluid port 114. In alternative embodiments, the supply conduit can be coupled to the second fluid port 114 and the load conduit can be coupled to the first fluid port 112. For example, the second fluid port 114 could be an inlet and the first fluid port 112 can be the outlet. The fluid controlled by the dual orifice variable flow rate valve 100 can be used to, for example, operate actuators, control valves, or the like.

The inner o-ring 113 and the outer o-ring 115 can fluidly seal the first fluid port 112 and the second fluid port 114 to ensure that the pressurized fluid provided by the conduits do not leak. For example, the inner o-ring 113 can prevent the fluid carried by the supply conduit to the first fluid port 112 does not leak past the inner o-ring 113 and into the fluid carried by the load conduit from the second fluid port 114. The o-rings 113, 115 can be comprised of a flexible material such as neoprene although any suitable material can be used. In alternative embodiments, the o-rings 113, 115 may be any appropriate sealing means or may not be employed.

**FIG. 2** shows a sectional view of the dual orifice variable flow rate valve 100 taken at 2-2 shown in FIG. 1. As shown in FIG. 2, the dual orifice variable flow rate valve 100 includes the valve body 110, which is comprised of an outer body 110a and an inner body 110b. Also shown are the first fluid port 112 and the second fluid port 114, which are formed in the inner body 110b. In alternative embodiments, the fluid ports can be formed in other locations of an alternative valve body. A dual valve member 120 is disposed in the valve body 110 and is adapted to control a fluid flow rate between the first fluid port 112 and the second fluid port 114. An actuator 130 is disposed in the valve body 110 and is coupled to the signal line 118. A diaphragm 140 is proximate the actuator 130.

The valve body 110, dual valve member 120, actuator 130, and diaphragm 140 are shown as concentrically disposed around the axis X-X. However, in alternative embodiments, the valve body 110, dual valve member 120, actuator 130, and diaphragm 140 may not be concentrically disposed around the axis X-X. For example, the dual valve member 120 and the actuator 130 could be offset from an axis of an alternative embodiment of the valve body 110. Additionally or alternatively, the diaphragm 140 could have an asymmetric shape that is not coaxial to an axis of the valve body 110.

In the embodiment shown, the valve body 110 can be formed by press fitting the inner body 110b into the outer body 110a. For example, the inner body 110b can be formed with the first fluid port 112 and the second fluid port 114 prior to the inner body 110b being inserted into the outer body 110a. Subsequently, the inner body 110b can be inserted into the outer body 110a with an interference fit. This may reduce the costs associated with fabricating the valve body 110 relative to other embodiments of the valve body 110. However, in alternative embodiments, the valve body 110 can be formed by other methods and have any appropriate shape. For example, alternative valve bodies can be formed by casting the valve body and have a non-cylindrical shape. In the embodiment shown, the fluid ports 112, 114 formed in the valve body 110 can be fluidly coupled with the dual valve member 120.

The dual valve member 120 can be comprised of valve members, such as those described in the following with reference to FIGS. 3-5b. Referring to FIG. 2, the valve members of the dual valve member 120 can move in the valve body 110. The movement of each valve member may be along the axis X-X. The movement of the valve member may be independent of the other valve member of the dual valve member 120. In the embodiment shown, valve members can move towards the actuator 130 coaxially with the axis X-X to fluidly couple the first fluid port 112 with the second fluid port 114. As will be explained in more detail in the following, the dual valve member 120 can fluidly couple the fluid ports 112, 114 with more than one orifice. Accordingly, the dual orifice variable flow rate valve 100 can control the fluid flow rate with the more than one orifice by moving the dual valve member 120 in the valve body 110. In these and other embodiments, the movement of the dual valve member 120 can be controlled by the actuator 130.

The actuator 130 is shown as having a cylindrical shape with a first distal end 130a that is oriented towards the first fluid port 112 and a second distal end 130b that is oriented towards the signal line 118. However, the actuator 130 can have any appropriate shapes and orientations. In the embodiment shown, the actuator 130 is a cylindrical solenoid although any suitable actuator can be employed. For example, the actuator 130 could be a shape memory alloy element that is coupled to the dual valve member 120. The actuator 130 receives an electrical signal from the signal line 118 and provides a magnetic field that moves the dual valve member 120, as described in more detail in the following with reference to FIGS. 3-5b. Still referring to FIG. 2, the actuator 130 may be separated from the fluid in the valve body 110 by the diaphragm 140.

In the embodiment shown, the diaphragm 140 is disposed proximate to the first distal end 130a and in contact with the actuator 130. The diaphragm 140 can prevent fluid inside the valve body 110 from reaching the actuator 130. In alternative embodiments, the diaphragm 140 may not be in contact with the actuator 130 or may not be employed. As shown in FIG. 2, an actuator o-ring 142 is disposed over the diaphragm 140, which may also prevent the fluid inside the valve body 110 from reaching the actuator 130. In addition to preventing fluid from contacting the actuator 130, the diaphragm 140 can limit the movement of the dual valve member 120. For example, the dual valve member 120 can press against the diaphragm 140 when moved by the actuator 130 as described in the following with reference to FIGS. 3-5b.

**FIG. 3** is an enlarged sectional view of the dual orifice variable flow rate valve 100. The dual valve member 120 is shown as having a first valve member 122 and a second valve member 124. In the embodiment shown, the valve members 122, 124 comprise the dual valve member 120. However, different valve members with various configurations can be employed in alternative dual valve members. For example, alternative dual valve members can include different numbers of valve members. In an exemplary embodiment, a dual valve member can be formed from a single piece of material comprised of rigid and flexible portions. As shown in FIG. 3, the valve body 110, dual valve member 120, and diaphragm 140 are concentrically disposed around the axis X-X.

With respect to the dual valve member 120, the first valve member 122 is disposed with a first distal end 122a that is proximate a first fluid orifice 112a on the first fluid port 112. A second distal end 122b is in is proximate to the second valve member 124. A conduit 122c in the first valve member 122 is also shown as proximate the first fluid orifice 112a. The conduit 122c is also fluidly coupled to the first fluid port 112 via the first fluid orifice 112a. The second valve member 124 is shown with an armature end 124a and a sealing end 124b. A spring 124c couples the second valve member 124 to the valve body 110. In the embodiment shown, both the first and second valve members 122, 124 can move along the axis X-X. The first and second valve members 122, 124 can also provide fluid seals, as will be described in more detail in the following.

As can be seen in FIG. 3, the first valve member 122 is in contact with the inner body 110b. This contact forms a fluid seal that can prevent fluid from flowing through the first fluid orifice 112a. For example, in embodiments where the first fluid port 112 receives pressurized fluid from a pressurized fluid source, the fluid seal at the first fluid orifice 112a can prevent the pressurized fluid from flowing from the first fluid port 112 to the second fluid port 114. In the same or alternative embodiments, the pressurized fluid can be provided to the second fluid port 114. Accordingly, the fluid seal at the first fluid orifice 112a can also prevent fluid flow from the second fluid port 114 to the first fluid port 112 through the first fluid orifice 112a.

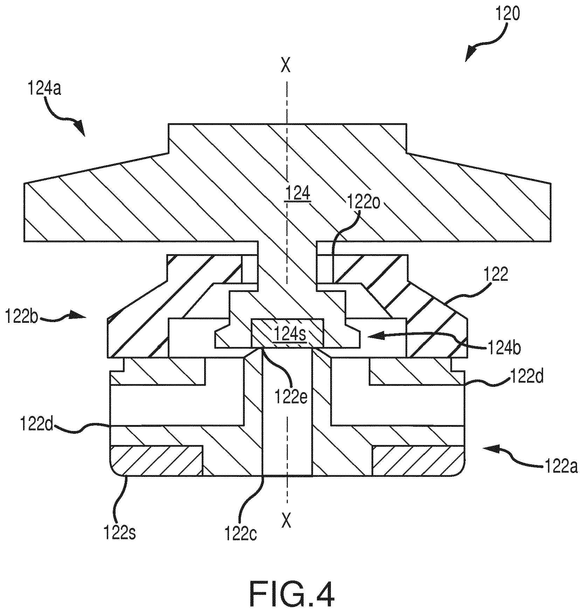

In the position shown in FIG. 3, the second valve member 124 is disposed such that the second distal end 122b is extended into and pressing against a portion of the first valve member 122. The second distal end 122b can provide a fluid seal that prevents the fluid from flowing between the first fluid port 112 and the second fluid port 114 via the conduit 122c. As will be explained in more detail in the following with reference to FIG. 4, the pressurized fluid may not flow between the first fluid port 112 and the second fluid port 114 due to a fluid seal between the first valve member 122 and the second valve member 124.

**FIG. 4** shows a further enlarged cross sectional view of the dual orifice variable flow rate valve 100. Only the dual valve member 120 is shown for clarity. The first valve member 122 and the second valve member 124 are shown as coaxially arranged around the axis X-X. In addition to the features described with reference to FIGS. 2 and 3, the first valve member 122 is also shown with a side conduit 122d that can fluidly couple the conduit 122c with the second fluid port 114. The first valve member 122 also includes a second fluid orifice 122e that can control the fluid flow rate between the first fluid port 112 and the second fluid port 114. An opening 122o is in the second distal end 122b. The opening 122o surrounds a portion of the second valve member 124. The first valve member 122 is also shown with a sealing ring 122s in the sealing end 124b that can be pressed against the inner body 110b (shown in FIGS. 1-3) to prevent fluid flow between the first fluid port 112 and the second fluid port 114. The second valve member 124 is shown as pressed against the second fluid orifice 122e in the first valve member 122.

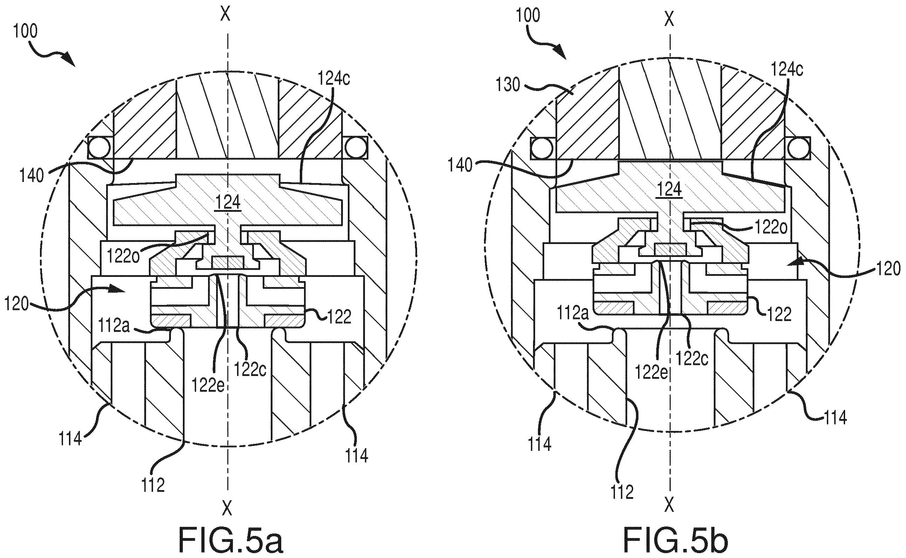

As can also be seen, the sealing end 124b is shown as disposed in the second distal end 122b. However, in alternative embodiments, the sealing end 124b may not be disposed in the second distal end 122b. For example, in alternative embodiments, the sealing end could be disposed around the second distal end. The sealing end 124b also includes a sealing surface 124s that can be pressed against the second fluid orifice 122e. Alternative embodiments may not include the sealing surface. In the embodiment shown in FIG. 4, the sealing end 124b extends through the opening 122o. The sealing end 124b is also not in contact with a surface of the opening 122o but may be in contact with (e.g., slidably coupled) an opening in alternative embodiments. The sealing end 124b can move relative to the first valve member 122 to control the fluid flow through the conduit 122c, as will be described in more detail in the following with reference to FIGS. 5a and 5b.

**FIGS. 5a and 5b** show the sectional view of the dual orifice variable flow rate valve 100 taken at 2-2 in FIG. 1. FIGS. 5a and 5b illustrate two actuated positions the dual valve member 120. As shown in FIG. 5a, the second valve member 124 is displaced away from the second fluid orifice 122e. Accordingly, the first fluid port 112 and the second fluid port 114 are fluidly coupled via the conduit 122c. In addition, a portion of the second valve member 124 is in contact with the first valve member 122 proximate the opening 122o. In the position shown in FIG. 5b, the second valve member 124 is displaced away from the inner body 110b and in contact with the diaphragm 140. Accordingly, the fluid ports 112, 114 are fluidly coupled via both the fluid orifices 112a, 122e.

Parameters of the dual valve member 120, such as dimensions of the fluid orifices 112a, 122e can correspond to flow rates. For example, a diameter of the second fluid orifice 122e can correspond to a first fluid flow rate when flowing through the conduit 122c due to the second valve member 124 being displaced away from the second fluid orifice 122e. Referring now to FIG. 5b, the fluid can have a second fluid flow rate that corresponds to the diameter of the fluid orifices 112a, 122e when the first valve member 122 is moved away from the first fluid orifice 112a as shown.

The first and second fluid flow rates can also correspond to the displacement of the first valve member 122 and the second valve member 124. For example, the displacement of the second valve member 124 from the second fluid orifice 122e can correspond to the first fluid flow rate. The greater the displacement of the second valve member 124 from the second fluid orifice 122e, the greater the first fluid flow rate. The displacement of the first valve member 122 from the first fluid orifice 112a can correspond to the second fluid flow rate. The greater the displacement of the first valve member 122 from the first fluid orifice 112a, the greater the second fluid flow rate. The displacement of the valve members 122, 124 can be controlled by the actuator 130, as will be described in more detail in the following.

The second valve member 124 can be displaced away from the second fluid orifice 122e with a magnetic field from the actuator 130. For example, the actuator 130 can generate a magnetic field that applies a magnetic force to the second valve member 124. The magnetic force may be directed towards the actuator 130 although other directions can be employed in other embodiments. The magnetic force can be sufficient to move the second valve member 124 relative to the first valve member 122. For example, the magnetic force may be greater than force applied by the spring 124c to the second valve member 124. In the embodiment shown, the actuator 130 can move, with the magnetic field, the second valve member 124 relative to the first valve member 122 to control the fluid flow rate through the conduit 122c.

As can be appreciated from FIGS. 5a and 5b, the contact between the valve members 122, 124 can be used to move the first valve member 122 away from the first fluid port 112. For example, the actuator 130 can apply a magnetic force that is sufficient to move both the first valve member 122 and the second valve member 124. In the embodiment show in FIG. 5b, the magnetic force applied by the actuator 130 to the second valve member 124 can be sufficient to oppose the force applied by the spring 124c to the second valve member 124. The force can also be sufficient to overcome any fluid forces applied to the first valve member 122.

The magnetic force can correspond to the electric current provided by the signal line 118 to the actuator 130. For example, the signal line 118 can provide a current to the actuator 130. The actuator 130 may receive the current and generate the magnetic field with coils in the actuator 130. The strength of the magnetic field can be proportional to, for example, the amps of the current provided by the signal line 118. The magnetic force can therefore be controlled by controlling the current. In alternative embodiments, the force applied to the second valve member 124 may be due to, for example, a shaped memory alloy (SMA) element coupled to the second valve member 124. In these embodiments, the force applied to the second valve member 124 may be proportional to the current applied to the SMA. In the embodiment shown, the first valve member 122 and the second valve member 124 are displaced by the magnetic force.

In addition to displacing the valve members 122, 124 to the fully open positions shown in FIGS. 5a and 5b, the actuator 130 can control the fluid flow rate by controlling the displacement of the valve members 122, 124. In the embodiment of FIGS. 1-5b, the magnetic force can be proportional to the current provided by the signal line 118. Since the magnetic force can correspond with the fluid flow rate through the dual orifice variable flow rate valve 100, the current can be proportional to the fluid flow rate through the dual orifice variable flow rate valve 100, as explained in more detail in the following.

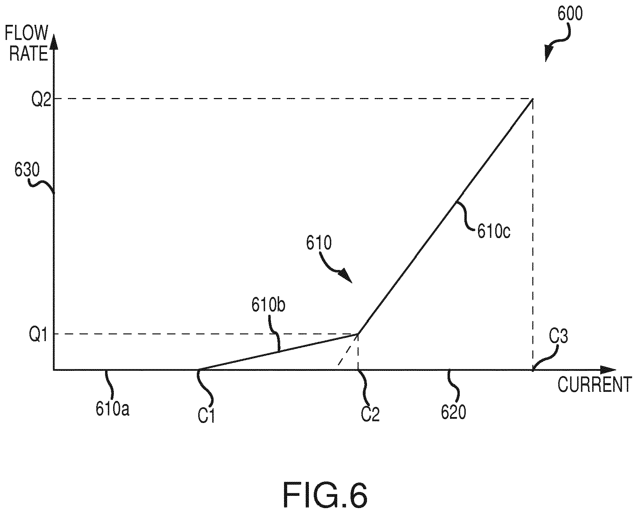

**FIG. 6** shows a graph 600 of a flow rate 610 representing an exemplary fluid flow through the dual orifice variable flow rate valve 100 according to an embodiment. The graph 600 includes a current axis 620 and a flow rate axis 630. The current axis 620 can be in units of amps. The flow rate axis 630 can be in units of volume per second although any suitable unit, such as mass per second, can be employed.

As shown, the flow rate 610 through the dual orifice variable flow rate valve 100 is proportional to the current provided by the signal line 118. The flow rate 610 has a first stage 610a, a second stage 610b, and a third stage 610c. The first stage 610a is shown as being zero for the embodiments described in the foregoing. The first stage 610a may be zero due to the first valve member 122 being in contact with the inner body 110b and the second valve member 124 being in contact with the first valve member 122, which can prevent fluid flow. In alternative embodiments, the first stage 610a can have a non-zero value. As can also be appreciated by the first stage 610a, the fluid flow rate remains zero when the current is between 0 and a first current C1.

The second stage 610b is between the first current C1 and a second current C2. The second stage 610b can increase from zero to a first flow rate Q1 at the second current C2. The first flow rate Q1 may be proportional to the size of the second fluid orifice 122e. The first flow rate Q1 can also be proportional to the distance that the second valve member 124 is displaced from the second fluid orifice 122e. The second stage 610b has a linear slope although any fluid flow with any suitable slope can be employed. In the embodiment shown, the second stage 610b increases linearly from the first current C1 to the second current C2 in proportion to the current supplied by the signal line 118 to the actuator 130.

The flow rate 610 can have a third stage 610c between the second current C2 and a third current C3. In the third stage 610c, the flow rate 610 can have a linear slope although other slopes may be employed in alternative embodiments. In the embodiment shown, the third stage increases linearly from the second current C2 to the third current C3 in proportion to the current supplied by the signal line 118 to the actuator 130. The slope of the third stage 610c can be proportional to the current supplied by the signal line 118 to the actuator 130. As shown, the slope of the third stage 610c is greater than the slope of the second stage 610b. The slope of the third stage 610c can be greater than the slope of the second stage 610b due to the size of the second fluid orifice 122e being smaller than the size of the first fluid orifice 112a, as shown in the embodiments of FIGS. 1-5b.

As can be appreciated, the flow rate increases in proportion to the current due to the magnetic force applied to the second valve member 124 by the actuator 130. For example, as the current supplied by the signal line 118 to the actuator 130 increases, the magnetic field of the actuator 130 increases. This increases the magnetic force applied to the second valve member 124. The first current C1 corresponds to when the magnetic forces along the axis X-X are balanced with other forces along the axis X-X on the second valve member 124. As the current increases from the first current C1 to the second current C2, the distance between the second valve member 124 and the second fluid orifice 122e increases. Accordingly, the flow rate increases from zero to the first flow rate Q1. The first flow rate Q1 corresponds to the position shown in FIG. 5a where the second valve member 124 is in contact with the first valve member 122 and the first valve member 122 is in contact with the inner body 110b.

As the current increases from the second current C2 to the third current C3, the flow rate increases from the first flow rate Q1 to the second flow rate Q2. This increase in flow rate from the first flow rate Q1 to the second flow rate Q2 can be due to the actuator 130 moving the first valve member 122 away from the inner body 110b. The current provided to the actuator 130 can vary to increase the magnetic force applied to the second valve member 124. The magnetic force displaces the second valve member 124 away from the inner body 110b and the first fluid orifice 112a. Since the size of the first fluid orifice 112a is larger than the size of the second fluid orifice 122e, the slope of the third stage 610c is greater than the slope of the second stage 610b. The second flow rate Q2 corresponds to the position shown in FIG. 5b where the second valve member 124 is in contact with the diaphragm 140.

The first and the second flow rates Q1, Q2 can correspond to stroke lengths of the first valve member 122. For example, a first stroke length may be the distance between the sealing end 124b and the second fluid orifice 122e at the position shown in FIG. 5a. The position shown in FIG. 5a is the position where the second valve member 124 is in contact with the first valve member 122. At this position, the second valve member 124 is fully displaced away from the second fluid orifice 122e and the fluid flow is at the first flow rate Q1. A second stroke length may be the distance between the first valve member 122 and the first fluid orifice 112a when the first valve member 122 is in the position shown in FIG. 5b. The position shown in FIG. 5b may be where the second valve member 124 is pressed against the diaphragm 140. At this position, the first valve member 122 is fully displaced away from the first fluid orifice 112a and the fluid flow is at the second fluid flow rate Q2.

The slope of the second stage 610b and the third stage 610c can correspond to parameters of the dual valve member 120. For example, the spring 124c can have a spring constant that corresponds to the current required to move the second valve member 124 along both the first and second stroke lengths. In the embodiment shown, the greater the spring constant, the more current that may be required to move the dual valve member 120 along the first and second stroke lengths. Other parameters, such as the mass and dimensions of the first valve member 122 and the second valve member 124 as well as fluid properties, can also cause alternative fluid flow rates to have different slopes, shapes, and fluid flow rates in alternative embodiments. For example, alternative embodiments, such as those described in the following, may not include the spring 124c and, instead, have springs coupled to different portions of the dual valve member 120.

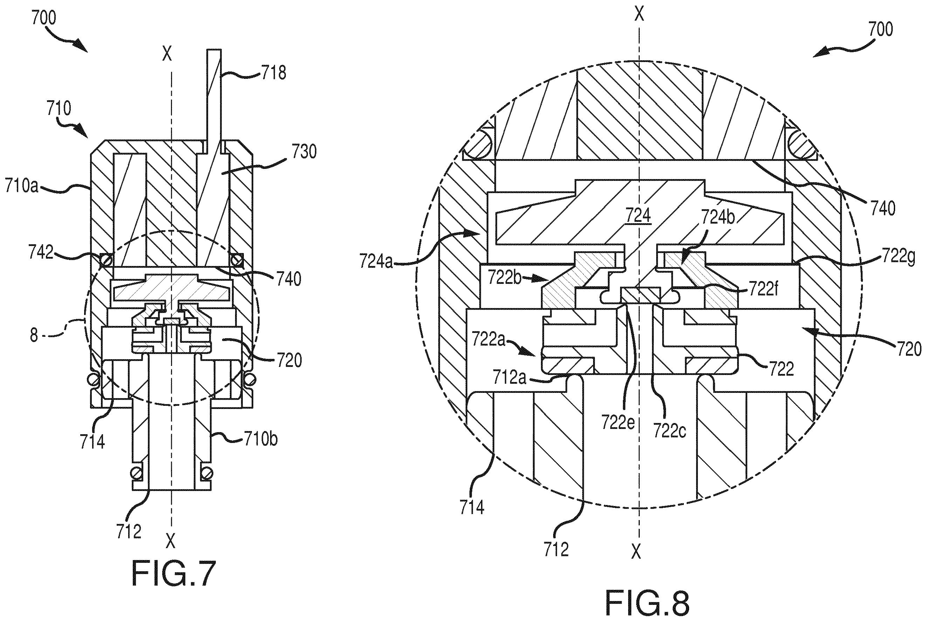

**FIG. 7** shows a dual orifice variable flow rate valve 700 according to an embodiment. As will be described in more detail in the following, the dual orifice variable flow rate valve 700 includes two springs. As shown in FIG. 7, the dual orifice variable flow rate valve 700 includes the valve body 710, which is comprised of an outer body 710a and an inner body 710b. Also shown are the first fluid port 712 and the second fluid port 714, which are formed in the inner body 710b. A dual valve member 720 is disposed in the valve body 710 and is adapted to control a fluid flow rate between the first fluid port 712 and the second fluid port 714. An actuator 730 is disposed in the valve body 710 and is coupled to the signal line 718. A diaphragm 740 is disposed proximate the actuator 730. An actuator o-ring 742 is disposed over the diaphragm 740, which may also prevent the fluid inside the valve body 710 from contacting the actuator 730. The valve body 710, the dual valve member 720, the actuator 730, and the diaphragm 740 are shown as concentrically disposed around the axis X-X.

**FIG. 8** is an enlarged sectional view of the dual orifice variable flow rate valve 700. The dual valve member 720 is shown as having a first valve member 722 and a second valve member 724. In the embodiment shown, the first valve member 722 and the second valve member 724 comprises the dual valve member 720 although different first valve and second valve members can be employed in alternative embodiments. Also shown are the valve body 710 and the diaphragm 740. As will be described in more detail in the following, the dual valve member 720 can move in the valve body 710 along the axis X-X.

The first valve member 722 is disposed with a first distal end 722a that is proximate a first fluid orifice 712a on the first fluid port 712. A conduit 722c in the first valve member 722 is also shown as proximate the first fluid orifice 712a. The conduit 722c is also fluidly coupled to the first fluid port 712 via the first fluid orifice 712a. A second fluid orifice 722e is shown in conduit 722c. The first valve member 722 is movably coupled to the second valve member 724 with a first spring 722f and the second valve member 724 is movably coupled to the valve body 710 with a second spring 722g. The second valve member 724 is shown with an armature end 724a and a sealing end 724b. In the embodiment shown, the first valve member 722 can move along the axis X-X.

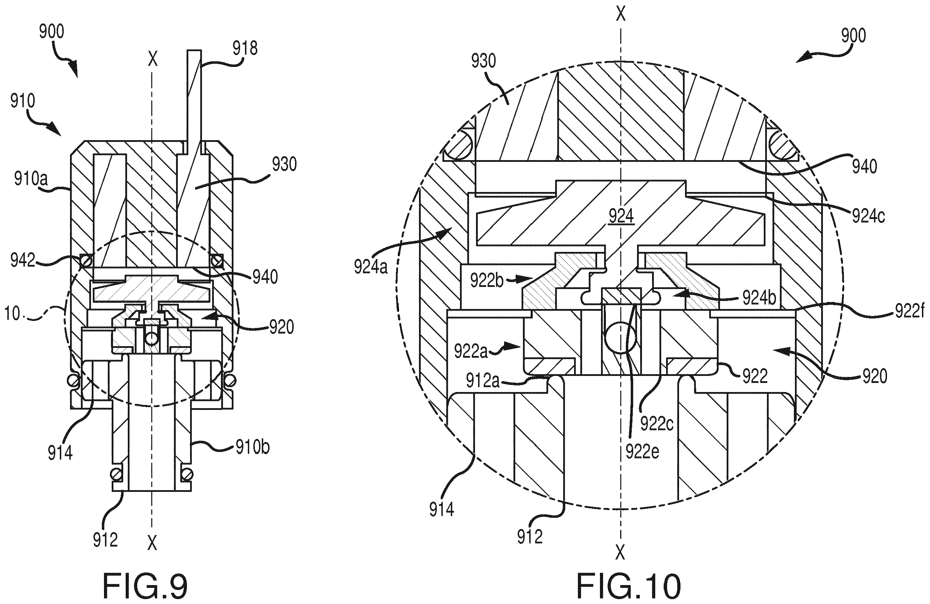

**FIG. 9** shows a dual orifice variable flow rate valve 900 according to an embodiment. As will be described in more detail in the following with reference to FIGS. 9 and 10, the dual orifice variable flow rate valve 900 includes a membrane in addition to a spring. As shown in FIG. 9, the dual orifice variable flow rate valve 900 includes the valve body 910, which is comprised of an outer body 910a and an inner body 910b. Also shown are a first fluid port 912 and a second fluid port 914, which are formed in the inner body 910b. A dual valve member 920 is disposed in the valve body 910 and is adapted to control a fluid flow rate between the first fluid port 912 and the second fluid port 914. An actuator 930 is disposed in the valve body 910 and is coupled to the signal line 918. A diaphragm 940 is disposed proximate the actuator 930. The valve body 910, the dual valve member 920, the actuator 930, and the diaphragm 940 are shown as concentrically disposed around the axis X-X.

**FIG. 10** is an enlarged sectional view of the dual orifice variable flow rate valve 900. The dual valve member 920 is shown as having a first valve member 922 and a second valve member 924. In the embodiment shown, the first valve member 922 and the second valve member 924 comprise the dual valve member 920 although different first valve and second valve members can be employed in alternative embodiments. Also shown are the valve body 910 and the diaphragm 940. An actuator o-ring 942 is disposed over the diaphragm 940, which may also prevent the fluid inside the valve body 910 from contacting the actuator 930. As will be described in more detail in the following, the dual valve member 920 can move in the valve body 910 along the axis X-X.

The first valve member 922 is disposed with a first distal end 922a that is proximate a fluid orifice 912a on the first fluid port 912. A plurality of conduits 922c (two are shown) in the first valve member 922 are also shown as proximate the fluid orifice 912a and concentrically disposed about the axis X-X. The plurality of conduits 922c is also fluidly coupled to the first fluid port 912 via the fluid orifice 912a. As can be appreciated, the plurality of conduits 922c have a cumulatively larger opening than a second fluid orifice 922e in the first valve member 922. The first valve member 922 is movably coupled to the second valve member 924 with a membrane 922f and the second valve member 924 is movably coupled to the valve body 910 with a spring 924c. The membrane 922f can be comprised of flexible material that, for example, allows fluid pressures within the valve body 910 to balance. The second valve member 924 is shown with an armature end 924a and a sealing end 924b. In the embodiment shown, the first valve member 922 can move along the axis X-X.

The embodiments described above provide a dual orifice variable flow rate valve 100, 700, 900. As explained in the foregoing, the dual orifice variable flow rate valve 100, 700, 900 control a fluid flow between the first fluid port 112, 712, 912 and the second fluid port 114, 714, 914. For example, the dual orifice variable flow rate valve 100, 700, 900 can control a fluid flow rate of the fluid flow. The fluid flow rate can be proportional to more than one orifice, such as the second fluid orifice 122e, 722e, 922e and the first fluid orifice 112a, 712a, 912a.

The second fluid orifice 122e, 722e, 922e can be formed in the first valve member 122, 722, 922 and have a dimension that corresponds to a first fluid flow rate Q1. The first fluid port 112, 712, 912 can be formed in the inner body 110b, 710b, 910b and have a dimension that corresponds to a second fluid flow rate Q2. For example, the second fluid flow rate Q2 can correspond to a dimension, such as the diameter, of the first fluid orifice 112a, 712a, 912a. The first and second fluid flow rates Q1, Q2 can be maximum fluid flow rates for fully displaced first valve member 122, 722, 922 and second valve member 124, 724, 924.

The displacement of the first valve member 122, 722, 922 and the second valve member 124, 724, 924 can be controlled by the actuator 130, 730, 930. For example, the current in the actuator 130, 730, 930 can be proportional to a displacement distance of the dual valve member 120, 720, 920. In the embodiments described in the foregoing, the current can be proportional to the displacement distance of the first valve member 122, 722, 922. The current can also be proportional to the displacement distance of the second valve member 124, 724, 924.

The displacement distance of the dual valve member 120, 720, 920 can correspond with the fluid flow rate through the dual orifice variable flow rate valve 100, 700, 900. For example, the fluid flow rate can correspond with the displacement distance of the first valve member 122, 722, 922. That is, the further the first valve member is displaced from the first fluid orifice 112a, 712a, 912a, the greater the fluid flow rate. Similarly, the fluid flow rate can correspond to the displacement distance of the second valve member 124, 724, 924. That is, the further the second valve member 124, 724, 924 is displaced away from the second fluid orifice 122e, 722e, 922e, the greater the fluid flow through the dual orifice variable flow rate valve 100, 700, 900.

As explained in the foregoing, the actuator 130, 730, 930 can control the fluid flow rate through the dual orifice variable flow rate valve 100, 700, 900 in proportion to the current. For example, the actuator 130, 730, 930 can move the second valve member 124, 724, 924 away from the second fluid orifice 122e, 722e, 922e in the first valve member 122, 722, 922 along the first stroke length. Accordingly, the flow rate through the dual valve member 120, 720, 920 can be in proportion to the current and the dimensions of the second fluid orifice 122e, 722e, 922e. In the second stroke length, the second valve member 124, 724, 924 contacts the first valve member 122, 722, 922 and displaces the first valve member 122, 722, 922 away from the first fluid orifice 112a, 712a, 912a. Accordingly, the fluid flow rate through the dual orifice variable flow rate valve 100, 700, 900 can be proportional to the current and the dimensions of the first fluid orifice 112a, 712a, 912a. The fluid flow through the dual orifice variable flow rate valve 100, 700, 900 can therefore be proportional to a dimension in more than one orifice and vary in proportion to the current.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other dual orifice variable flow rate valve, and not just to the embodiments described above and shown in the accompanying figures. Accordingly, the scope of the embodiments described above should be determined from the following claims.

## Claims

1. A dual orifice variable flow rate valve (100, 700, 900), comprising:
a valve body (110, 710, 910) with a first fluid port (112, 712, 912) and a second fluid port (114, 714, 914), the first fluid port (112, 712, 912) having a first fluid orifice (112a, 712a, 912a);
a dual valve member (120, 720, 920) disposed in the valve body (110, 710, 910), the dual valve member (120, 720, 920) comprised of:
a first valve member (122, 722, 922) disposed in the valve body (110, 710, 910), the first valve member (122, 722, 922) having a second fluid orifice (122e, 722e, 922e) fluidly coupled to the first fluid port (112, 712, 912) and a first distal end (122a, 722a, 922a) proximate the first fluid orifice (112a, 712a, 912a); and
a second valve member (124, 724, 924) disposed in the valve body (110, 710, 910) proximate the second fluid orifice (122e, 722e, 922e) in the first valve member (122, 722, 922);
an actuator (130, 730, 930) configured to move the second valve member (124, 724, 924) relative to the first valve member (122, 722, 922) to control a fluid flow between the first fluid port (112, 712, 912) and the second fluid port (114, 714, 914) through the second fluid orifice (122e, 722e, 922e) in the first valve member (122, 722, 922); **characterised in that** the valve further comprises
a diaphragm (140, 740, 940) that prevents fluid from contacting the actuator (130, 730, 930) and limits the movement of the dual valve member.

2. The dual orifice variable flow rate valve (100, 700, 900) of claim 1, wherein the actuator (130, 730, 930) is further configured to move the second valve member (124, 724, 924) to control a fluid flow rate between the first fluid port (112, 712, 912) and the second fluid port (114, 714, 914) through the first fluid orifice (112a, 712a, 912a).

3. The dual orifice variable flow rate valve (100, 700, 900) of claim 1, wherein the second valve member (124, 724, 924) further comprises a sealing end (124b, 724b, 924b) that selectively engages the first valve member (122, 722, 922).

4. The dual orifice variable flow rate valve (100, 700, 900) of claim 3, wherein the sealing end (124b, 724b, 924b) is disposed inside the first valve member (122, 722, 922) and is adapted to contact a surface inside the first valve member (122, 722, 922).

5. The dual orifice variable flow rate valve (100, 700, 900) of claim 1, wherein the second valve member (124, 724, 924) further comprises an armature end (124a, 724a, 924a) that selectively engages the diaphragm (140, 740, 940) to limit a stroke length of the second valve member (124, 724, 924).

6. The dual orifice variable flow rate valve (100, 700, 900) of claim 1, wherein the first valve member (122, 722, 922) and the second valve member (124, 724, 924) move along an axis (X-X) of the dual orifice variable flow rate valve (100, 700, 900), wherein the second valve member (124, 724, 924) preferably moves along the axis (X-X) at a second stroke length that corresponds with the fluid flow rate between the first fluid port (112, 712, 912) and the second fluid port (114, 714, 914) via a conduit (122c, 722c, 922c) in the first valve member (122, 722, 922).

7. The dual orifice variable flow rate valve (900) of claim 6, further comprising a plurality of conduits (922c) concentrically disposed about the axis (X).

8. A method of controlling a fluid flow through a dual orifice variable flow rate valve (100, 700, 900) comprised of a first fluid port (112, 712, 912) and a second fluid port (114, 714, 914), the method comprising the steps of:
providing a first valve member (122, 722, 922) and a second valve member (124, 724, 924);
fluidly coupling the first fluid port (112, 712, 912) and the second fluid port (114, 714, 914) through a second fluid orifice (122e, 722e, 922e) in the first valve member (122, 722, 922) by moving the second valve member (124, 724, 924) with an actuator (130, 730, 930); and
fluidly coupling the first fluid port (112, 712, 912) and the second fluid port (114, 714, 914) through a first fluid orifice (112a, 712a, 912a) by moving the first valve member (122, 722, 922) with the second valve member (124, 724, 924); **characterised in that** the method further comprises the step of
providing a diaphragm that prevents fluid from contacting the actuator (130, 730, 930) and limits the movement of the dual valve member.

9. The method of claim 8, further comprising:
flowing fluid through the second fluid orifice (122e, 722e, 922e) at a first fluid flow rate that corresponds to a displacement distance of the second valve member (124, 724, 924); and
flowing fluid through the first fluid orifice (112a, 712a, 912a) at a second fluid flow rate that corresponds to a displacement distance of the first valve member (122, 722, 922).

10. The method of claim 8, further comprising controlling the fluid flow rate through the second fluid orifice (122e, 722e, 922e) and the first fluid orifice (112a, 712a, 912a) with a current in the actuator (130, 730, 930) that applies a magnetic force to the second valve member (124, 724, 924).

11. The method of claim 8, further comprising selectively engaging a sealing end (124b, 724b, 924b) of the second valve member (124, 724, 924) with the first valve member (122, 722, 922) to move the first valve member (122, 722, 922), wherein the selectively engaging preferably comprises contacting a surface in the first valve member (122, 722, 922) with the sealing end (124b, 724b, 924b).

12. The method of claim 8, further comprising selectively engaging an armature end (124a, 724a, 924a) on the second valve member (124, 724, 924) with the diaphragm to limit a stroke length of the second valve member (124, 724, 924).

13. The method of claim 8, further comprising moving the first valve member (122, 722, 922) and the second valve member (124, 724, 924) along an axis (X-X) to fluidly couple the first fluid port (112, 712, 912) and the second fluid port (114, 714, 914).

14. The method of claim 8, further comprising displacing the second valve member (124, 724, 924) away from the second fluid orifice (122e, 722e, 922e) wherein the second fluid orifice (122e, 722e, 922e) is in the first valve member (122, 722, 922).

## Patentansprüche

1. Ventil (100,700,900) mit doppelter Öffnung und variabler Strömungsrate, mit:
einem Ventilkörper (110,710,910) mit einem ersten Fluidport (112, 712,912) und einem zweiten Fluidport (114,714,914), wobei der erste Fluidport (112,712,912) eine erste Fluidöffnung (112a,712a, 912a) aufweist;
einem Doppelventilteil (120,720,920), das in dem Ventilkörper (110, 710,910) angeordnet ist, wobei das Doppelventilteil (120,720,920) umfasst:
ein erstes Ventilteil (122,722,922), das in dem Ventilkörper (110, 710,910) angeordnet ist, wobei das erste Ventilteil (122,722,922) eine zweite Fluidöffnung (122e,722e,922e), die sich in Fluidverbindung mit dem ersten Fluidport (112,712,912) befindet, und ein erstes distales Ende (122a,722a,922a) nahe der ersten Fluidöffnung (112a,712a,912a) aufweist; und
ein zweites Ventilteil (124,724,924), das in dem Ventilkörper (110, 710,910) nahe der in dem ersten Ventilteil (122,722,922) ausgebildeten zweiten Fluidöffnung (122e,722e,922e) angeordnet ist;
einem Aktuator (130,730,930), der konfiguriert ist zum Bewegen des zweiten Ventilteils (124,724,924) relativ zu dem ersten Ventilteil (122, 722,922), um einen durch die im ersten Ventilteil (122,722,922) ausgebildete zweite Fluidöffnung (122e,722e,922e) erfolgenden Fluidstrom zwischen dem ersten Fluidport (112,712,912) und dem zweiten Fluidport (114,714,914) zu steuern;
**dadurch gekennzeichnet, dass** das Ventil ferner eine Membran (140, 740,940) aufweist, die das Fluid daran hindert, in Kontakt mit dem Aktuator (130,730,930) zu gelangen, und die die Bewegung des Doppelventilteils beschränkt.

2. Ventil (100,700,900) mit doppelter Öffnung und variabler Strömungsrate gemäß Anspruch 1, bei dem der Aktuator (130,730,930) ferner konfiguriert ist zum Bewegen des zweiten Ventilteils (124,724,924) dahingehend, dass eine Rate der durch die erste Fluidöffnung (112a, 712a,912a) erfolgenden Fluidströmung zwischen dem ersten Fluidport (112,712,912) und dem zweiten Fluidport (114,714, 914) gesteuert wird.

3. Ventil (100,700,900) mit doppelter Öffnung und variabler Strömungsrate gemäß Anspruch 1, bei dem das zweite Ventilteil (124,724,924) ferner ein Dichtungsende (124b,724b,924b) aufweist, das selektiv mit dem ersten Ventilteil (122,722,922) zusammengreift.

4. Ventil (100,700,900) mit doppelter Öffnung und variabler Strömungsrate gemäß Anspruch 3, bei dem das Dichtungsende (124b,724b,924b) in dem ersten Ventilteil (122,722,922) angeordnet ist und in der Lage ist, eine Fläche in dem ersten Ventilteil (122,722,922) zu kontaktieren.

5. Ventil (100,700,900) mit doppelter Öffnung und variabler Strömungsrate gemäß Anspruch 1, bei dem das zweite Ventilteil (124,724,924) ferner ein Armaturenende (124a,724a,924a) aufweist, das selektiv mit der Membran (140,740,940) zusammengreift, um eine Hublänge des zweiten Ventilteils (124,724,924) zu begrenzen.

6. Ventil (100,700,900) mit doppelter Öffnung und variabler Strömungsrate gemäß Anspruch 1, bei dem sich das erste Ventilteil (122,722, 922) und das zweite Ventilteil (124,724,924) entlang einer Achse (X-X) des Ventils (100,700,900) mit doppelter Öffnung und variabler Strömungsrate bewegen, wobei sich das zweite Ventilteil (124,724,924) entlang der Achse (X-X) vorzugsweise mit einer zweiten Hublänge bewegt, die der Rate der durch eine Durchleitung (122c,722c,922c) in dem ersten Ventilteil (122,722,922) erfolgenden Fluidströmung zwischen dem ersten Fluidport (112,712,912) und dem zweiten Fluidport (114,714, 914) entspricht.

7. Ventil (900) mit doppelter Öffnung und variabler Strömungsrate gemäß Anspruch 6, ferner mit mehreren Durchlässen (922c), die konzentrisch um die Achse (X) herum angeordnet sind.

8. Verfahren zum Steuern eines Ventils (100,700,900) mit doppelter Öffnung und variabler Strömungsrate, das einen ersten Fluidport (112,712,912) und einen zweiten Fluidport (114,714,914) aufweist, wobei das Verfahren die Schritte aufweist:
Bereitstellen eines ersten Ventilteils (122,722, 922) und eines zweiten Ventilteils (124,724,924),
Herstellen einer Fluidverbindung zwischen dem ersten Fluidport (112, 712,912) und dem zweiten Fluidport (114,714,914) durch eine in dem ersten Ventilteil (122,722,922) ausgebildete zweite Fluidöffnung (122e,722e,922e) hindurch mittels Bewegens des zweiten Ventilteils (124, 724,924) mit Hilfe eines Aktuators (130,730,930);
Herstellen einer Fluidverbindung zwischen dem ersten Fluidport (112, 712,912) und dem zweiten Fluidport (114,714,914) durch eine erste Fluidöffnung (112a,712a,912a) mittels Bewegens des ersten Ventilteils (122,722,922) zusammen mit dem zweiten Ventilteil (124,724,924), **dadurch gekennzeichnet, dass** Verfahren ferner den Schritt umfasst:
Bereitstellen einer Membran, die das Fluid daran hindert, in Kontakt mit dem Aktuator (130,730,930) zu gelangen, und die die Bewegung des Doppelventilteils beschränkt.

9. Verfahren nach Anspruch 8, ferner mit:
Erzeugen eines Stroms von Fluid durch die zweite Fluidöffnung (122e, 722e,922e) mit einer ersten Fluidströmungsrate, die einer Verschiebungsstrecke des zweiten Ventilteils (124,724,924) entspricht; und
Erzeugen eines Stroms von Fluid durch die erste Fluidöffnung (112e, 712e,912e) mit einer zweiten Fluidströmungsrate, die einer Verschiebungsstrecke des ersten Ventilteils (122,722,922) entspricht.

10. Verfahren nach Anspruch 8, ferner mit dem Steuern der Rate der Fluidströmung durch die zweite Fluidöffnung (122e,722e,922e) und die erste Fluidöffnung (112e,712e,912e) mittels eines elektrischen Stroms in dem Aktuator (130,730,930), der eine Magnetkraft auf das zweite Ventilteil (124,724,924) aufbringt.

11. Verfahren nach Anspruch 8, ferner mit dem selektiven Herbeiführen eines Zusammengriff eines Dichtungsendes (124b,724b,924b) des zweiten Ventilteils (124,724,924) mit dem ersten Ventilteil (122,722, 922), um das erste Ventilteil (122,722,922) zu bewegen, wobei das selektive Herbeiführen des Zusammengriffs vorzugsweise das Kontaktieren einer in dem ersten Ventilteil (122,722,922) vorgesehenen Fläche mit dem Dichtungsende (124b,724b,924b) umfasst.

12. Verfahren nach Anspruch 8, ferner mit dem selektiven Herbeiführen eines Zusammengriff eines Armaturendes (124a,724a,924a) des zweiten Ventilteils (124,724,924) mit der Membran, um eine Hublänge des zweiten Ventilteils (124,724,924) zu beschränken.

13. Verfahren nach Anspruch 8, ferner mit dem Bewegen des ersten Ventilteils (122,722,922) und des zweiten Ventilteils (124,724,924) entlang einer Achse (X-X) zum Herstellen einer Fluidverbindung zwischen dem ersten Fluidport (112,712,912) und dem zweiten Fluidport (114, 714,914).

14. Verfahren nach Anspruch 8, ferner mit dem Bewegen des zweiten Ventilteils (124,724,924) von der zweiten Fluidöffnung (122e,722e,922e) weg, wobei sich die zweite Fluidöffnung (122e,722e,922e) in dem ersten Ventilteil (122,722,922) befindet.

## Revendications

1. Soupape à double orifice et à débit variable (100, 700, 900) comprenant :
un corps de soupape (110, 710, 910) ayant un premier embout de passage de fluide (112, 712, 912) et un second embout de passage de fluide (114, 714, 914), le premier embout de passage de fluide (112, 712, 912) ayant un premier orifice de passage de fluide (112a, 712a, 912a),
un élément de soupape double (120, 720, 920) situé dans le corps de soupape (110, 710, 910),
l'élément de soupape double (120, 720, 920) étant constitué :
d'un premier élément de soupape (122, 722, 922) situé dans le corps de soupape (110, 710, 910), le premier élément de soupape (122, 722, 922) ayant un second orifice de passage de fluide (122e, 722e, 922e) en liaison fluidique avec le premier embout de passage de fluide (112, 712, 912), et une première extrémité distale (122a, 722a, 922a) située au voisinage du premier orifice de passage de fluide (112a, 712a, 912a), et
d'un second élément de soupape (124, 724, 924) situé dans le corps de soupape (110, 710, 910) au voisinage du second orifice de passage de fluide (122e, 722e, 922e) dans le premier élément de soupape (122, 722, 922),
un actionneur (130, 730, 930) conformé pour déplacer le second élément de soupape (124, 724, 924) par rapport au premier élément de soupape (122, 722, 922) de façon à réguler la circulation de fluide entre le premier embout de passage de fluide (112, 712, 912) et le second embout de passage de fluide (114, 714, 914) par le second orifice de passage de fluide (122e, 722e, 922e) dans le premier élément de soupape (122, 722, 922),
**caractérisée en ce que**
la soupape comporte en outre un diaphragme (140, 740, 940) qui empêche que le fluide vienne en contact avec l'actionneur (130, 730, 930) et limite le déplacement de l'élément de soupape double.

2. Soupape à double orifice et à débit variable (100, 700, 900) conforme à la revendication 1,
dans laquelle l'actionneur (130, 730, 930) est en outre conformé pour déplacer le second élément de soupape (124, 724, 924) de façon à réguler le débit de fluide entre le premier embout de passage de fluide (112, 712, 912) et le second embout de passage de fluide (114, 714, 914) par le premier orifice de passage de fluide (112a, 712a, 912a).

3. Soupape à double orifice et à débit variable (100, 700, 900) conforme à la revendication 1,
dans laquelle le second élément de soupape (124, 724, 924) comporte en outre une extrémité d'obturation (124b, 724b, 924b) qui vient en prise sélectivement avec le premier élément de soupape (122, 722, 922).

4. Soupape à double orifice et à débit variable (100, 700, 900) conforme à la revendication 3,
dans laquelle l'extrémité d'obturation (124b, 724b, 924b) est située à la partie interne du premier élément de soupape (122, 722, 922) et est susceptible de venir en contact avec une surface située à la partie interne du premier élément de soupape (122, 722, 922).

5. Soupape à double orifice et à débit variable (100, 700, 900) conforme à la revendication 1,
dans laquelle le second élément de soupape (124, 724, 924) comporte en outre une extrémité d'induit (124a, 724a, 924a) qui vient sélectivement en prise avec le diaphragme (140, 740, 940) pour limiter la longueur de la course du second élément de soupape (124, 724, 924).

6. Soupape à double orifice et à débit variable (100, 700, 900) conforme à la revendication 1,
dans laquelle le premier élément de soupape (122, 722, 922) et le second élément de soupape (124, 724, 924) se déplacent le long de l'axe (X-X) de la soupape à double orifice et à débit variable (100, 700, 900), le second élément de soupape (124, 724, 924) se déplaçant de préférence le long de l'axe (X-X) sur une seconde longueur de course qui correspond au débit de fluide entre le premier embout de passage de fluide (112, 712, 912) et le second embout de passage de fluide (114, 714, 914) par l'intermédiaire d'une conduite (122c, 722c, 922c) dans le premier élément de soupape (122, 722, 922).

7. Soupape à double orifice et à débit variable (900) conforme à la revendication 6, comprenant en outre un ensemble de conduites (922c) situées concentriquement autour de l'axe (X).

8. Procédé de commande du débit au travers d'une soupape à double orifice et à débit variable (100, 700, 900) constitué d'un premier embout de passage de fluide (112, 712, 912) et d'un second embout de passage de fluide (114, 714, 914), ce procédé comprenant des étapes consistant à :
se procurer un premier élément de soupape (122, 722, 922) et un second élément de soupape (124, 724, 924),
établir une liaison fluidique entre le premier embout de passage de fluide (112, 712, 912) et le second embout de passage de fluide (114, 714, 914) par un second orifice de passage de fluide (122e, 722e, 922e) dans le premier élément de soupape (122, 722, 922) en déplaçant le second élément de soupape (124, 724, 924) avec un actionneur (130, 730, 930),
établir une liaison fluidique entre le premier embout de passage de fluide (112, 712, 912) et le second embout de passage de fluide (114, 714, 914) par un premier orifice de passage de fluide (112a, 712a, 912a) en déplaçant le premier élément de soupape (122, 722, 922) avec le second élément de soupape (124, 724, 924),
**caractérisé en ce que**
le procédé comporte en outre une étape consistant à se procurer un diaphragme qui empêche que le fluide vienne en contact avec l'actionneur (130, 730, 930) et limite le déplacement de l'élément de soupape double.

9. Procédé conforme à la revendication 8,
comprenant en outre des étapes consistant à :
faire circuler du fluide dans le second orifice de passage de fluide (122e, 722e, 922e) avec un premier débit de fluide qui correspond à une distance de déplacement du second élément de soupape (124, 724, 924), et faire circuler du fluide dans le premier orifice de passage de fluide (112a, 712a, 912a) avec un second débit de fluide qui correspond à une distance de déplacement du premier élément de soupape (122, 722, 922).

10. Procédé conforme à la revendication 8, comprenant en outre une étape consistant à commander le débit de fluide dans le second orifice de passage de fluide (122e, 722e, 922e) et le premier orifice de passage de fluide (112a, 712a, 912a) avec un courant dans l'actionneur (130, 730, 930) qui applique une force magnétique au second élément de soupape (124, 724, 924).

11. Procédé conforme à la revendication 8, comprenant en outre une étape consistant à mettre sélectivement en prise une extrémité d'obturation (124b, 724b, 924b) du second élément de soupape (124, 724, 924) avec le premier élément de soupape (122, 722, 922) pour déplacer le premier élément de soupape (122, 722, 922), la mise en prise sélective comprenant de préférence une mise en contact d'une surface dans le premier élément de soupape (122, 722, 922) avec l'extrémité d'obturation (124b, 724b, 924b).

12. Procédé conforme à la revendication 8, comprenant en outre une étape consistant à mettre sélectivement en prise une extrémité d'induit (124a, 724a, 924a) située sur le second élément de soupape (124, 724, 924) avec le diaphragme pour limiter la longueur de la course du second élément de soupape (124, 724, 924).

13. Procédé conforme à la revendication 8, comprenant en outre une étape consistant à déplacer le premier élément de soupape (122, 722, 922) et le second élément de soupape (124, 724, 924) le long d'un axe (X-X) pour établir une liaison fluidique entre le premier embout de passage de fluide (112, 712, 912) et le second embout de passage de fluide (114, 714, 914).

14. Procédé conforme à la revendication 8, comprenant en outre une étape consistant à déplacer le second élément de soupape (124, 724, 924) pour l'éloigner du second orifice de passage de fluide (122e, 722e, 922e), le second orifice de passage de fluide (122e, 722e, 922) étant situé dans le premier élément de soupape (122, 722, 922).
